# EUROPEAN PATENT APPLICATION

(11) **EP 4 451 495 A1**
(43) Date of publication of application: **23.10.2024**
(21) Application number: 22935724.9
(22) Date of filing: 16.12.2022
(51) Int. Cl.: H02J 1/00, H02J 3/38, H02J 7/00, H02J 7/34

(54) **POWER GENERATING SYSTEM**

(30) Priority: 30.03.2022 JP 2022054810
(71) Applicant: Hitachi, Ltd., Tokyo 100-8280 (JP)
(72) Inventor: TAKAHASHI Akeshi, Tokyo 100-8280 (JP); SHIMADA Atsushi, Tokyo 100-8280 (JP); KUMANO Kengo, Tokyo 100-8280 (JP)
(74) Representative: Manitz Finsterwald Patent- und Rechtsanwaltspartnerschaft mbB
(86) International application number: PCT/JP2022/046509
(87) International publication number: WO 2023/188596

(57) **Abstract**

Provided is a power generating system that is able to supply low-cost and highly efficient power to apparatuses having different battery voltage specifications. This power generating system 1 has a plurality of power generating modules 100 each comprising an engine 200 that burns a fuel to generate electric power; a renewable energy-derived fuel supply device 900 that burns a renewable energy-derived fuel in the engine 200 to generate electric power; a power generator 300 that generates AC power from the electric power of the engine 200; an AC/DC converter 400 that converts the AC power to DC power; and a module power output unit 401 that outputs the DC power. The module power output units 401 adjacent to each other are connected to each other by means of a plurality of parallel adjustment switches 31 that can open and close, the parallel adjustment switches 31 are connected in series, and is provided with a DC power output unit 700 connected to at least one of the module power output units 401 by means of one of a plurality of series adjustment switches 30.

## Description

### Technical Field

The present invention relates to a power generating system and a power generation control method.

### Background Art

In recent years, with the spread of electric vehicles (EV), the short cruising distance has been a problem. As a solution to this problem, the battery capacity is increased, but a new problem that it takes a long time to charge the battery arises.

For this reason, spread of rapid charging in which charging power can be supplied in a shorter time by increasing a battery voltage is expected.

On the other hand, from the viewpoint of stable supply of power, with the spread of renewable energy (hereinafter abbreviated as renewable energy), enhancement in an adjustment power supply capable of following the fluctuation in power demand is desired. As the introduced amount of renewable energy increases in the future, it becomes difficult to follow the demand fluctuation only by adjusting the load factor of the current base power supply, and thus it has been proposed to stably supply power including rapid charging of EV by introducing a battery energy storage system (BESS) or a power generation device using an internal combustion engine.

In the technique described in PTL 1, power generated by a plurality of DC power supply devices is combined by a DC power supply bus, and the power is distributed to the EV.

In addition, in the technique described in PTL 2, when the power combined by the DC power supply bus is distributed to the EV, the power can be supplied at a voltage matching the battery voltage of the EV through the DC/DC converter.

In addition, the power can also be supplied from the DC power supply bus to the power system via the DC/AC converter. In the technique described in PTL 3, one DC/AC converter is installed between a DC power supply bus and a power system.

### Citation List

### Patent Literature

PTL 1: Japanese Patent Publication No. 6441520
PTL 2: Japanese Patent Publication No. 6570779
PTL 3: Japanese Patent Application Laid-Open No. 2020-68544

### Summary of Invention

### Technical Problem

The battery voltage of the EV is currently mainly about 400 V, but it is expected that the voltage will increase to greater than or equal to 800 V in consideration of further spread of rapid charging. On the other hand, since the average age of use of the automobile is about 10 years, a plurality of battery voltage specifications such as 400 V and 800 V may coexist in the future.

Therefore, in the method of combining the power generated by the DC power supply device in the DC power supply bus as in the technique described in PTL 1, there is a problem that the power cannot be supplied to the EV having different voltage specifications.

In addition, as in the technique described in PTL 2 and PTL 3, if the DC/DC converter is interposed between the DC power supply bus and the EV, it is possible to supply power to the EV having different voltage specifications, but with this method, a DC/DC converter is required for each EV, and thus there is a problem that equipment cost increases and spreading does not proceed.

In addition, when the battery voltage specification and the supply power amount to the battery change, the efficiency of the power generation device using the internal combustion engine also changes, but there is a limit to avoiding a decrease in efficiency only by adjusting the operating point of the internal combustion engine.

Since the power generation efficiency greatly affects the increase and decrease of the CO2 emissions, how to maintain and improve the power generation efficiency become a problem when the voltage specification and the supply power amount greatly differ depending on the EV to be rapidly charged.

However, none of PTLs 1 to 3 mentions the above problem.

As described above, in the prior art, it is difficult to provide low-cost and highly efficient rapid charging to EVs having different battery voltage specifications.

An object of the present invention is to provide a power generating system and a power generation control method capable of supplying low-cost and highly efficient power to devices having different battery voltage specifications.

### Solution to Problem

In order to achieve the above object, the present invention is configured as follows.

A power generating system includes a plurality of power generation modules each including an engine that combusts fuel to generate power, a renewable energy-derived fuel supply device that causes the engine to combust fuel derived from renewable energy to generate power, a power generator that generates alternating-current (AC) power from the power of the engine, an AC/DC converter that converts the alternating-current power into direct-current (DC) power, and a module power output unit that outputs the DC power, wherein the module power output units adjacent to each other are connected to each other via a plurality of parallel adjustment switches capable of opening and closing the connection, the parallel adjustment switches being connected to each other so as to be a continuous series connection, and a DC power output unit that connects at least one of the module power output units via one of the plurality of series adjustment switches being included.

Furthermore, a power generation control method includes causing a plurality of engines to combust fuel derived from renewable energy to generate power, operating a plurality of power generators by power of the plurality of engines to generate a plurality of AC power, converting the plurality of AC power into a plurality of DC power by a plurality of AC/DC converters, and combining and outputting at least one or two or more of the plurality of DC power.

### Advantageous Effects of Invention

According to the present invention, a power generating system and a power generation control method capable of supplying low-cost and highly efficient power to devices having different battery voltage specifications can be provided.

Problems, configurations, and effects other than those described above will be clarified by the description of the following embodiments.

### Brief Description of Drawings

[FIG. 1A] FIG. 1A is an explanatory diagram of a power generating system for rapid charging and a power generation state according to a first example of the present invention.
[FIG. 1B] FIG. 1B is an explanatory diagram of a power generating system for rapid charging and a power generation state according to the first example of the present invention.
[FIG. 2] FIG. 2 is an explanatory diagram of a power generating system for rapid charging and a power generation state according to the first example of the present invention.
[FIG. 3] FIG. 3 is an explanatory diagram of a power generating system for rapid charging and a power generation state according to the first example of the present invention.
[FIG. 4A] FIG. 4A is an explanatory diagram of operating points of an engine according to the first example of the present invention.
[FIG. 4B] FIG. 4B is an explanatory diagram of operating points of a power generator according to the first example of the present invention.
[FIG. 4C] FIG. 4C is an explanatory diagram of operating points of a power generator according to the first example of the present invention.
[FIG. 5A] FIG. 5A is an explanatory diagram of a power generating system for rapid charging and a power generation state according to a second example of the present invention.
[FIG. 5B] FIG. 5B is an explanatory diagram of a power generating system for rapid charging and a power generation state according to the second example of the present invention.
[FIG. 6] FIG. 6 is an explanatory diagram of a control device and a control method of a power generating system for rapid charging according to a third example of the present invention.
[FIG. 7] FIG. 7 is a flowchart of a control method of a power generating system for rapid charging according to a third example of the present invention.
[FIG. 8A] FIG. 8A is an explanatory diagram of a power generating system for rapid charging and a power generation state according to a fourth example of the present invention.
[FIG. 8B] FIG. 8B is an explanatory diagram of a power generating system for rapid charging and a power generation state according to the fourth example of the present invention.
[FIG. 9] FIG. 9 is an explanatory diagram of a power generating system for rapid charging and a power generation state according to a fifth example of the present invention.
[FIG. 10A] FIG. 10A is an explanatory diagram illustrating a relationship between power demand and generated power.
[FIG. 10B] FIG. 10B is an explanatory diagram illustrating a relationship between power demand and generated power.
[FIG. 10C] FIG. 10C is an explanatory diagram illustrating a relationship between power demand and generated power.
[FIG. 11A] FIG. 11A is an explanatory diagram of a power generating system for rapid charging and a power generation state different from those of the present invention.
[FIG. 11B] FIG. 11B is an explanatory diagram of a power generating system for rapid charging and a power generation state different from those of the present invention.
[FIG. 11C] FIG. 11C is an explanatory diagram of a power generating system for rapid charging and a power generation state according to an example different from the present invention.
[FIG. 12A] FIG. 12A is an explanatory diagram of operating points of a power generating engine in an example different from the present invention.
[FIG. 12B] FIG. 12B is an explanatory diagram of operating points of a power generator in an example different from the present invention.
[FIG. 12C] FIG. 12C is an explanatory diagram of operating points of a power generator in an example different from the present invention.
[FIG. 13A] FIG. 13A is an explanatory diagram of a power generating system for rapid charging and a power generation state according to another example different from the present invention.
[FIG. 13B] FIG. 13B is an explanatory diagram of a power generating system for rapid charging and a power generation state according to another example different from the present invention.
[FIG. 13C] FIG. 13C is an explanatory diagram of a power generating system for rapid charging and a power generation state according to another example different from the present invention.

### Description of Embodiments

Hereinafter, examples of the present invention will be described with reference to the drawings. In the following description, the same components are denoted by the same symbols. Their names and functions are the same, and duplicate descriptions are avoided. Although the following description is directed to a power generating system for rapid charging, the effect of the present invention is not limited thereto, and can be applied to a power generating system that supplies power to a power consumption device having different voltage specifications and a power generation control method in general.

### EXAMPLES

### (First example)

Hereinafter, a first example of the present invention will be described.

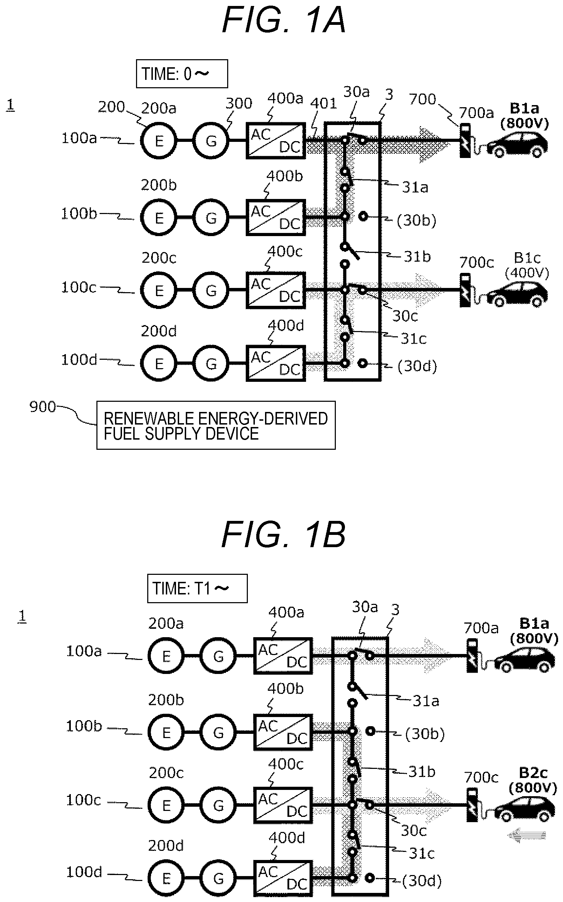

FIGS. 1A to 4C are explanatory diagrams of a first example of the present invention.

Prior to the description of the first example of the present invention, a relationship between power demand and generated power, problems of an example different from the present invention, and operating points of an engine (internal combustion engine) and a power generator will be described.

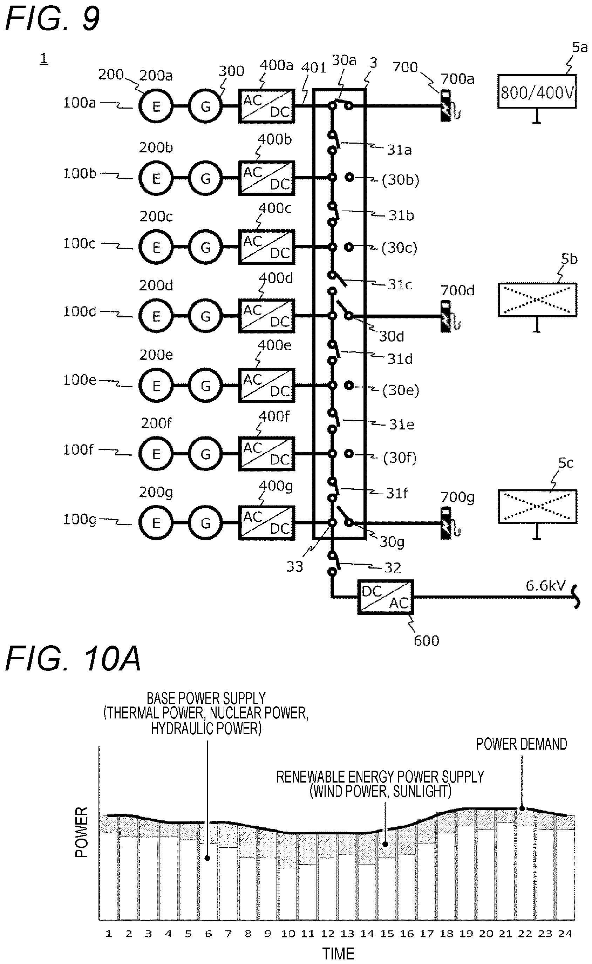

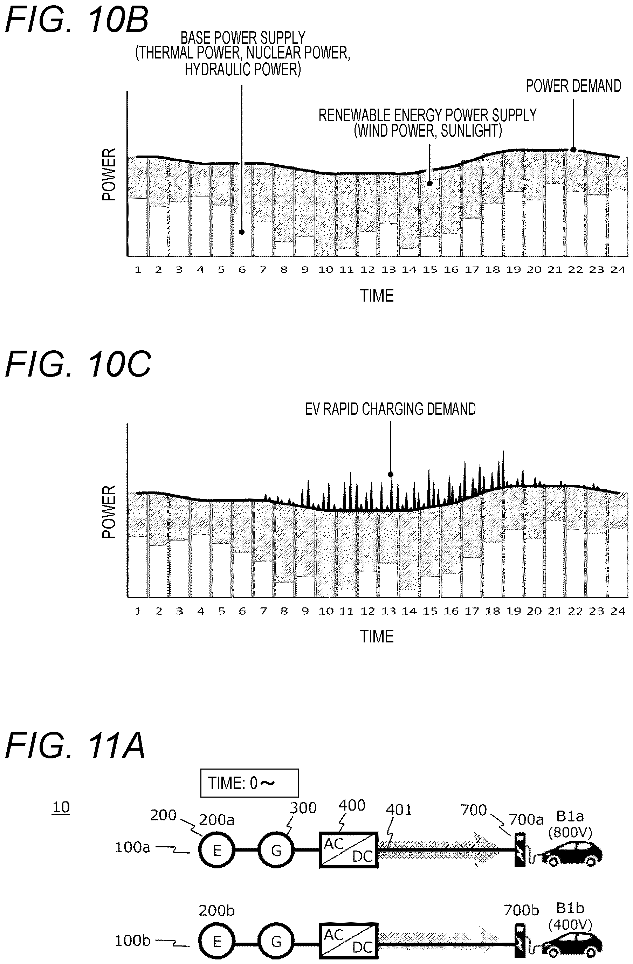

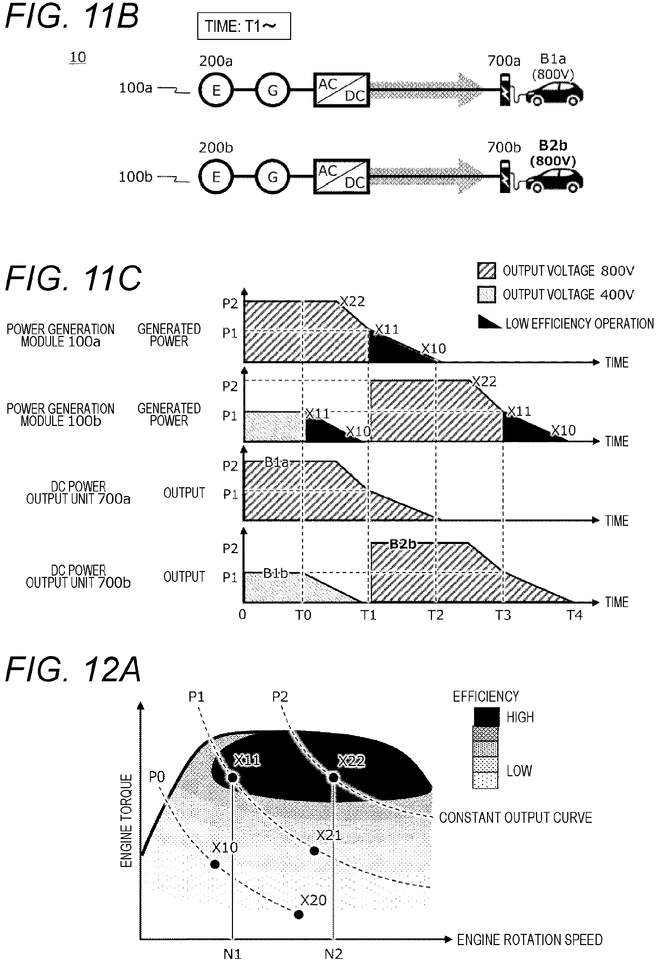

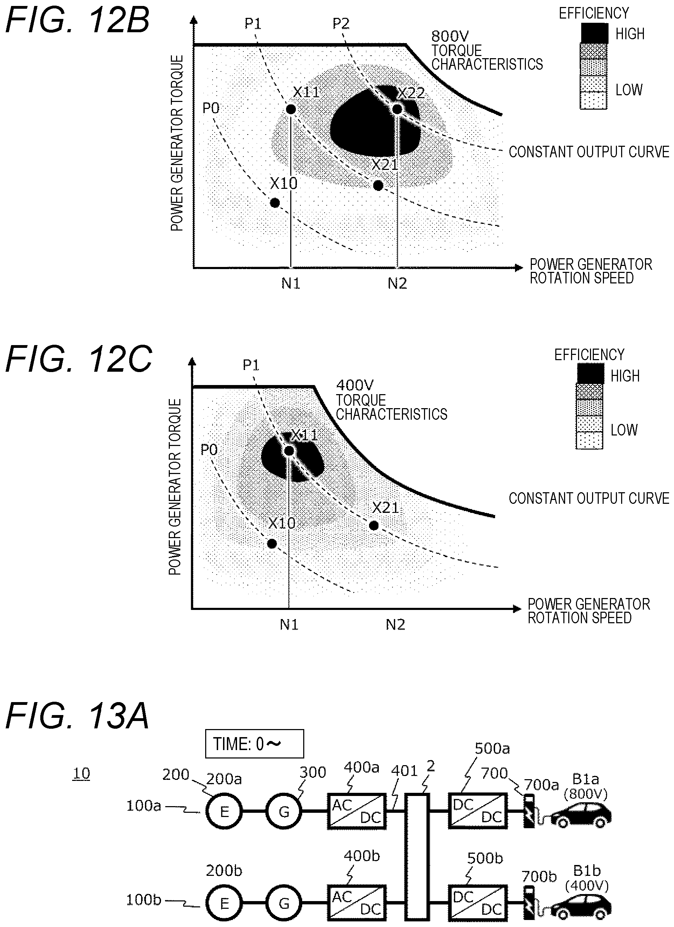

FIGS. 10A to 10C are explanatory diagrams illustrating a relationship between power demand and generated power. FIGS. 11A to 11C are explanatory diagrams of a power generating system for rapid charging and a power generation state which are examples different from the present invention. FIGS. 12A to 12C are explanatory diagrams of operating points of a power generating engine and a power generator in an example different from the present invention. FIGS. 13A to 13C are explanatory diagrams of another mode of a power generating system for rapid charging and a power generation state in another example different from the present invention.

As a background of the present invention, a relationship between power demand and generated power will be described with reference to FIGS. 10A to 10C. The relationship between power demand and generated power will be described because although the current power demand-supply balance is relatively stable, there is a high possibility that stable supply of power will not be able to be maintained in the future, and the present invention solves the problem.

As indicated by a thick solid line in FIG. 10A, the power demand changes from moment by moment, and the generated power indicated by the bar graph is adjusted so as to follow the power demand. However, generated power (hatched display portion of the bar graph) generated by a renewable energy power supply such as wind power or sunlight fluctuates depending on climatic conditions. Therefore, the generated power of the base power supply is adjusted to follow the fluctuation in the power demand and the output fluctuation of the renewable energy power supply.

The base power supply mainly includes thermal power generation, nuclear power generation, and hydraulic power generation, and often adjusts the generated power by changing the load factor of the hydraulic power generation or some thermal power generation.

In the example illustrated in FIG. 10A, a case in which the renewable energy power supply ratio is about 20% in time average, which is relatively close to the current power supply configuration in Japan.

On the other hand, when the renewable energy supply ratio becomes about 50%, the output fluctuation of the renewable energy power supply becomes more significant than the fluctuation of the power demand, as illustrated in FIG. 10B. In this situation, it is difficult to follow the fluctuation of the power demand only by changing the load factor of the base power supply, and the increase in the power generation cost due to the decrease in the operating rate of the base power supply and the decrease in the power generation efficiency also becomes a serious problem.

In addition, as illustrated in FIG. 10C, when the rapid charging of the EV becomes widespread, the power demand necessary for the rapid charging occurs on a large scale and irregularly in a short time.

The existing base power supply cannot respond to such rapid fluctuations in the power demand. This is because the existing base power supply is configured by a large-scale power plant on the premise of system interconnection, and cannot respond to demand fluctuations in a short time. In the case of the hydraulic power generation or some thermal power generation described above, the generated power can be adjusted by changing the load factor, but the amount of power generation is limited to a small amount.

It is also difficult to secure necessary power by newly installing a hydraulic power plant or a thermal power plant. This is because hydraulic power generation has few suitable sites, and thermal power generation has a large amount of CO2 emission, and thus introduction of renewable energy for carbon neutral is a bottleneck. In addition, since both the newly installed hydraulic power plant and thermal power plant are operated at a low load factor for power adjustment, it is extremely difficult to recover the construction cost.

As described above, as illustrated in FIG. 10C, when the renewable energy power supply and the rapid charging spread simultaneously, the supply and demand gap of power significantly expands, and thus, there is a high possibility that unstableness and blackout of the power supply system will occur frequently and economic activities cannot be maintained.

As a solution, a proposal has been made to achieve stable supply of power including rapid charging of EV by introduction of a battery energy storage system (BESS) . However, the BESS has a problem in that the introduction cost is high and the CO2 emission at the time of manufacturing is large.

In addition, when the BESS is rapidly charged, this leads to a rapid increase in power demand and reverses the result, and thus the charging of the BESS needs to be performed over a relatively long time. Therefore, for example, in order to respond to the rapid charging demand of the EVs concentrated during the day, it is required to provide the BESS with a battery capacity that is several times the power amount required by the EV battery and to secure a corresponding laying area.

Therefore, further cost increase and an increase in CO2 emission at the time of manufacturing arise, and it is difficult to consider that widespread use will be promoted.

As another solution, a proposal has been made to introduce a power generation device using an internal combustion engine, but there are many problems in the prior art. This will be described with reference to FIGS. 11A to 13C.

First, a power generating system for rapid charging different from the present invention is illustrated in FIGS. 11A and 11B, and a power generation state thereof is illustrated in FIG. 11C. FIGS. 11A and 11B illustrate the operating states of the power generating system at different time 0 and time T1, respectively, and correspond to time 0 and time T1 in FIG. 11C.

As illustrated in FIG. 11A, a power generating system 10 includes power generation modules 100a, 100b. Each of the power generation modules 100a, 100b includes an engine 200, a power generator 300 that generates AC power from the power of the engine 200, an AC/DC converter 400 that converts the AC power into DC power, and module power output unit 401 that outputs the DC power.

The module power output unit 401 is connected to a DC power output unit 700 and supplies charging power to the EV battery. At time 0, EV batteries B1a and B1b having voltage specifications of 800 V and 400 V, respectively, are connected to power generation modules 100a and 100b. At time T1, the charging of the 400 V EV battery B1b is completed, and the 800 V EV battery B2b is newly connected to the DC power output unit 700b.

FIG. 11C illustrates generated power of the power generation modules 100a and 100b and outputs of the DC power output units 700a and 700b at this time. Looking at a period from time 0 to time T0, the power generation module 100a generates power of output voltage 800 V and magnitude P2. This is directly output as power having voltage of 800 V and magnitude P2 by the DC power output unit 700a, and is supplied to the battery B1a. The power generation module 100b generates power of output voltage 400 V and magnitude P1 (<P2) . This is directly output as power having voltage of 400 V and magnitude P1 by the DC power output unit 700b, and supplied to the battery B1b.

In general, the magnitude of the power that can be supplied to the battery depends on the battery temperature. Therefore, in a state where the battery temperature immediately after the start of charging (from time 0 to time T0) is low, large power can be supplied to the battery as it is, but when charging progresses to time T0 to time T1, the battery temperature becomes high, and thus it becomes necessary to reduce the supply power to the battery to suppress the temperature rise.

That is, the power generation module 100a gradually reduces the generated power from P2 to P1 while maintaining the output voltage 800 V, and the power generation module 100b gradually reduces the generated power from P1 to 0 while maintaining the output voltage 400 V, and each module supplies the generated power to the batteries B1a and B1b, respectively. At time T1, the battery B1b is fully charged.

Subsequently, from time T1 to time T2, the power generation module 100a gradually reduces the generated power from P1 to 0 while maintaining the output voltage of 800 V, and continues the supply to the battery B1a. At time T2, the battery B1a is fully charged. Note that when the battery capacities of the batteries B1a (voltage specification 800 V) and B1b (voltage specification 400 V) are equal, the charging time of the battery B1a is shortened, but here, the battery capacity of B1a is set to about 3 times that of B1b. When the voltage specifications of the batteries B1a and B1b are the same, the charging time is proportional to the battery capacity, but as illustrated in FIG. 11C, since the voltage specification of the battery B1a is 800 V, the charging time is suppressed to about 1.5 times the battery B1b.

As described above, even when the battery capacity increases, it is possible to avoid a significant increase in the battery charging time by increasing the voltage.

On the other hand, from time T1 to time T2, an EV battery B2b of 800 V is newly connected to the DC power output unit 700b of the power generation module 100b. Therefore, the power generation module 100b generates power of output voltage 800 V and magnitude P2. This is output as it is by the DC power output unit 700b and supplied to the battery B2b.

After time T2, the power generation module 100a stops operating. The power generation module 100b gradually reduces the generated power from P2 to 0 while maintaining output voltage 800 V, and continues the supply to the battery B2b.

FIGS. 12A to 12C illustrate operating points of the engine and the power generator at this time. The power generator modules 100a and 100b have the same specification, and both have the characteristics illustrated in FIGS. 12A to 12C.

In general, engines are designed to maximize efficiency at the most frequent operating point. In FIG. 12A, an operating point X22 at the rotation speed N2 and the output P2, an operating point X11 at the rotation speed N1 and the output P1, and the like are operating points at which the engine efficiency is maximized. On the other hand, the operating point at which the efficiency of the power generator is maximized differs depending on the output voltage. For example, in the case of the output voltage 800 V, the efficiency is maximized at the operating point X22 of the rotation speed N2 and the output P2 as illustrated in FIG. 12B, whereas in the case of the output voltage 400 V, the efficiency is maximized at the operating point X11 of the rotation speed N1 and the output P1 as illustrated in FIG. 12C.

Therefore, when power is supplied to the battery having the voltage specification of 800 V, the operating point at which the efficiency (hereinafter referred to as system efficiency.) of the combined system of the engine and the power generator is maximized is the operating point X22 of the output P2 from the results illustrated in FIGS. 12A and 12B.

When charging progresses to reduce the generated power to P2 → P1 → P0, the operating point corresponding thereto becomes X22 → X11 → X10. While the operating point transitions from X22 → X11, the engine is operated at a highly efficient operating point and the power generator is also operated at a relatively highly efficient operating point, so that high system efficiency can be maintained.

On the other hand, while the operating point transitions from X11 → X10, both the engine and the power generator are operated in a low efficient state, and thus the system efficiency is also greatly reduced.

On the other hand, when power is supplied to the battery having the voltage specification of 400 V, the operating point at which the system efficiency is maximized is the operating point X11 of the output P1 from the results illustrated in FIGS. 12A and 12C.

In addition, when charging progresses to reduce the generated power from P1 → P0, the operating point corresponding thereto becomes X11 → X10. While the operating point transitions from X11 → X10, both the engine and the power generator are operated in a low efficient state, and thus the system efficiency is also greatly reduced.

Although both the operating points X11 and X21 can be selected for the output P1, it can be determined that the operating point X11 having excellent system efficiency should be selected. In addition, in FIGS. 12A to 12C, the rotation speeds of the engine and the power generator are the same, but the same can be said even if the power generator is rotated at a predetermined change gear ratio with respect to the rotation speed of the engine via the transmission between the engine and the power generator.

With reference to FIGS. 12A to 12C, the following can be said regarding the power generation efficiency at each time in FIG. 11C.

From time 0 to time T0, the power generation module 100a and the power generation module 100b are operated at operating points X22 and X11 at which efficiency is maximized, respectively. From time T0 to time T1, the operating point of the power generation module 100a transitions from X22 to X11, and the high efficiency operation is maintained, but the operating point of the power generation module 100b transitions from X11 to X10, and thus the operation is performed in a low efficiency state. After time T1, the operating point of the power generation module 100a transitions from X11 to X10, and is operated in a low efficiency state.

On the other hand, the power generation module 100b is operated at the operating point X22 at which the efficiency is maximized, and from time T2 to time T3, transitions from the operating point X22 to X11 to maintain the high efficiency operation, but from time T3, transitions from the operating point X11 to X10 and is operated in a low efficiency state.

Assuming that the total power generation amount of the power generation modules 100a and 100b between time 0 and time T4 illustrated in FIG. 11C is 100%, the power generation amount to become the low efficiency operation occupies 15%.

As described above, the advantages and disadvantages of the configurations of different examples of the present invention and the like illustrated in FIGS. 11A to 11C are summarized as follows from the viewpoint of the degree of freedom in the generated voltage, the degree of freedom in the load factor adjustment, and the power generation efficiency.
1) The degree of freedom in the generated voltage is high. This is because the operating point can be changed for each power generation module. As a result, there is an advantage that EV batteries having different voltage specifications can be flexibly responded.
2) The degree of freedom in the load factor adjustment is low. This is because the power interchange between the power generation modules is impossible. As a result, as illustrated in the power generation module 100a from time T1 to time T2 in FIG. 11C, a state in which the power generation module 100a is operated at a low load frequently occurs, and there is a problem that the charging time cannot be shortened.
3) The power generation efficiency is low. This is also related to 2) described above, but this is because the operating points of the power generation module 100a and the power generation module 100b become low load and low efficiency as the battery approaches full charge. As a result, there is a problem that the CO2 emission cannot be reduced.

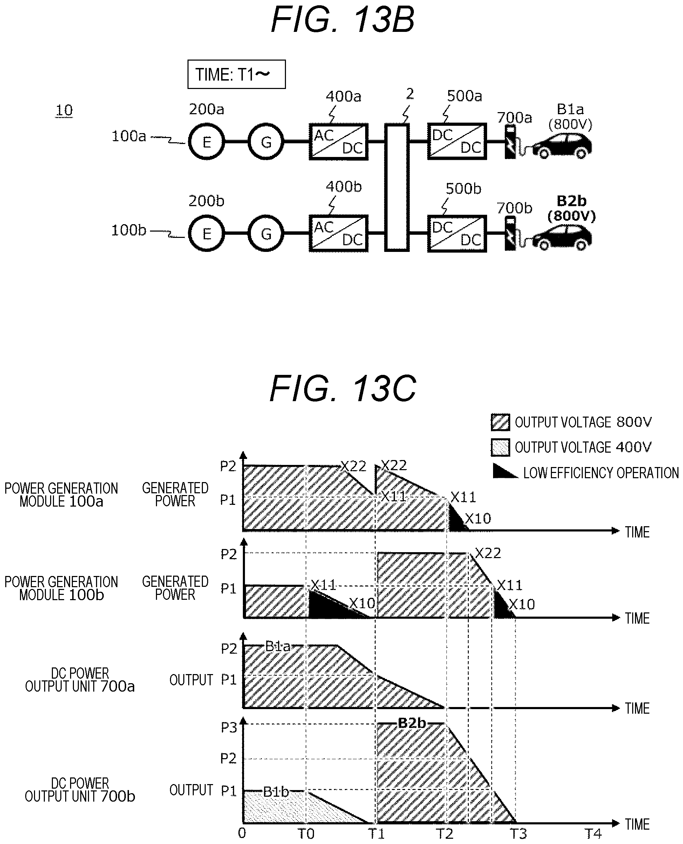

As a solution of 2) and 3) described above, a technique as illustrated in FIGS. 13A to 13C is disclosed in PTL 2. FIGS. 13A and 13B illustrate operating states of the power generating system for rapid charging at different times 0 and T1, respectively, and FIG. 13C illustrates a power generation state.

In the example illustrated in FIG. 13A, the outputs of the AC/DC converters 400a and 400b of the power generation modules 100a and 100b are both connected to the power combining/distributing device 2. In addition, two outputs from the power combining/distributing device 2 are connected to the DC power output units 700a and 700b via the DC/DC converters 500a and 500b, respectively.

With such a configuration, it is possible to freely distribute the power of the plurality of power generation modules 100a and 100b to the plurality of EV batteries after being aggregated by the power combining/distributing device 2.

As a result, as illustrated in FIGS. 11A and 11B, as compared with the configuration in which the EV battery is connected for each of the power generation modules 100a and 100b, the power supply amount can be adjusted in a wider range with respect to one EV battery, so that the charging time can be shortened.

However, when the generated power is aggregated by the power combining/distributing device 2, there is a restriction that the output voltages of the plurality of power generation modules 100a and 100b need to be the same.

FIG. 13C illustrates the generated power of the power generation modules 100a and 100b and the outputs of the DC power output units 700a and 700b.

With respect to the power generation efficiency at each time in FIG. 13C, the following can be said with reference to FIGS. 12A to 12C.

Between time 0 and time T0, the power generation modules 100a, 100b both generate power of output voltage 800 V. In order to aggregate the generated power by the power combining/distributing device 2, it is necessary to equalize the output voltages of the two power generation modules 100a and 100b as described above.

At this time, the power generation module 100a that outputs power of magnitude P2 is operated at the operating point X22 where system efficiency is maximized. The power generation module 100b that outputs power of magnitude P1 is also operated at the operating point X11 where system efficiency is high. A part of the power aggregated by the power combining/distributing device 2 is output as power having voltage of 800 V and magnitude P2 from the DC power output unit 700a via the DC/DC converter 500a, and is supplied to the battery B1a. The remaining power is output as power having voltage of 400 V and magnitude P1 from the DC power output unit 700b via the DC/DC converter 500b, and is supplied to the battery B1b.

Since the total output of the power generation modules 100a, 100b only needs to be P1+P2, it is also possible to output power having magnitude of (P1+P2)/2. In this case, both power generation modules 100a, 100b are operated at the operation point between the operating points X22 and X11 illustrated in FIGS. 12A to 12C.

When the charging progresses to time T0 to T1, the power generation modules 100a and 100b gradually reduce the generated power while maintaining the output voltage of 800 V. Although the power generation module 100a transitions from the operating point X22 to X11 and maintains the high efficiency operation, the power generation module 100b transitions from the operating point X11 to X10 and thus operates in a low efficiency state. At time T1, the battery B1b is fully charged.

Subsequently, from time T1 to time T2, the power generation module 100a increases the generated power to P2 while maintaining the output voltage 800 V, and then gradually reduces the generated power to P1. That is, the operating point transitions from the operating point X22 to X11 while maintaining high system efficiency. On the other hand, the power generation module 100b outputs power of output voltage 800 V and magnitude P2, and is operated at the operating point X22 where efficiency becomes maximum. Among the power aggregated in the power combining/distributing device 2, most of the power is output as power of voltage of 800 V and magnitude P3 (>P2) from the DC power output unit 700b via the DC/DC converter 500b and supplied to the battery B2b. The remaining power is supplied from the DC power output unit 700a to the battery B1a at voltage of 800 V via the DC/DC converter 500a.

In this way, with the configuration illustrated in FIGS. 13A and 13B, it is possible to supply power exceeding the maximum generated power P2 of one power generation module to one EV battery. As a result, the battery B2b is fully charged at time T3, and the charging time can be greatly shortened. Assuming that the total power generation amount of the power generation modules 100a and 100b between time 0 and time T3 illustrated in FIG. 13C is 100%, the power generation amount in the low efficiency operation is about 10%, and the power generation efficiency can be improved with respect to the configurations illustrated in FIGS. 11A and 11B.

As described above, the advantages and disadvantages of the configurations of the technique different from the present invention illustrated in FIGS. 13A to 13C are summarized as follows from the viewpoint of the degree of freedom in the generated voltage, the degree of freedom in the load factor adjustment, and the power generation efficiency.

1) The degree of freedom in the generated voltage is high. This is because the power can be freely distributed to the plurality of EV batteries via the power combining/distributing device. As a result, there is an advantage that EV batteries having different voltage specifications can be flexibly responded.
2) The degree of freedom of load factor adjustment is high. This is because the power of the plurality of power generation modules can be aggregated by the power combining/distributing device. As a result, as shown at times T1 to T2 in FIG. 13C, the plurality of power generation modules can be operated at a high load, and the power exceeding the maximum generated power of one power generation module can be supplied to one EV battery, so that the charging time can be shortened.
3) The power generation efficiency is improved compared to the configurations illustrated in FIGS. 11A and 11B. This is also related to 2) described above, but this is because a plurality of power generation modules can be operated at a high load and a highly efficient operating point. However, there is still a low efficiency operation state.

Therefore, the configurations illustrated in FIGS. 13A and 13B are improved over the configurations illustrated in FIGS. 11A and 11B in the 2) and 3) described above.

However, since one DC/DC converter 500a or 500b is necessarily required for each of the DC power output units 700a and 700b, there is a large problem in terms of equipment cost.

Moreover, since the DC/DC converters 500a and 500b play a role of aggregating and outputting the generated power of the plurality of power generation modules 100a and 100b, it is necessary that the power capacity for the plurality of AC/DC converters 400a and 400b is provided in a single device, and hence increase in size and cost of the device is inevitable.

In addition, in order to suppress heat generation of the battery, the operating time with the supply power greatly reduced is long with respect to the maximum power capacity of the DC/DC converters 500a and 500b, and the maximum power capacity is required only for a slight period. For this reason, operation efficiency as equipment is significantly low, cost recovery is extremely difficult, and this becomes a bottleneck for widespread use.

Note that PTL 1 discloses a configuration in which generated power is aggregated in a power combining/distributing device and then directly distributed to a DC power output unit without passing through a DC/DC converter. However, in this configuration, the output voltage of the DC power output unit is limited to a single voltage specification aggregated in the power combining/distributing device, and hence there is a problem that the degree of freedom of the generated voltage described in 1) above is significantly impaired.

The configurations illustrated in FIGS. 11A, 11B, 13A, and 13B described above has been disclosed so far, but how the system efficiency in the rapid charging application of the EV differs among the configurations illustrated in FIGS. 11A, 11B, 13A, and 13B has not been disclosed so far.

In addition, in the configurations illustrated in FIGS. 11A, 11B, 13A, and 13B, a low efficiency operation state always exists, but there is no document addressing this as a problem. Furthermore, regarding the configurations illustrated in FIGS. 11A, 11B, 13A, and 13B, there is no document addressing problems in terms of the degree of freedom of the generated voltage, the degree of freedom of the load factor adjustment, and the power generation efficiency.

The present invention extracts the problems with respect to the techniques illustrated in FIGS. 11A, 11B, 13A, and 13B, and provides a power generating system, a control device, and a control method capable of solving such problems. That is, the present invention provides a system which is low in cost and excellent in all of a degree of freedom of a generated voltage, a degree of freedom of a load factor adjustment, and power generation efficiency.

The principle thereof will be described below.

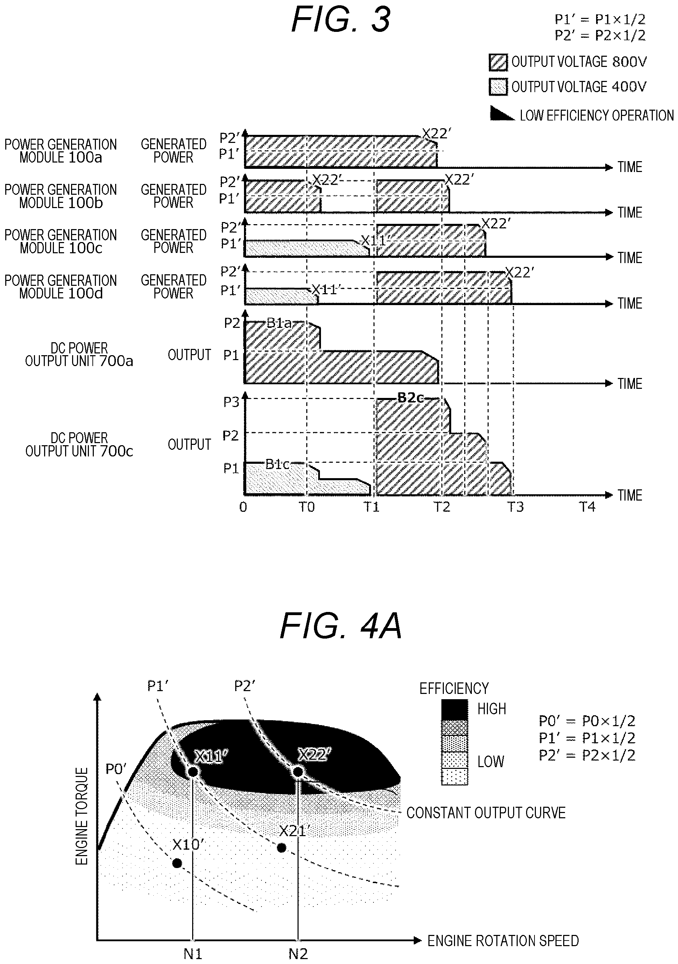

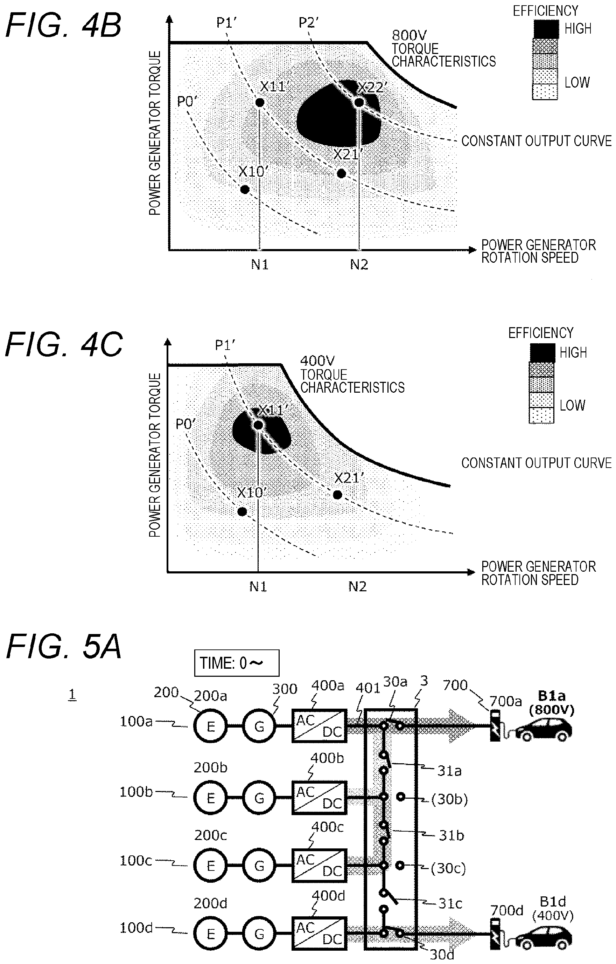

FIGS. 1A, 1B, 2, and 3 are explanatory diagrams of a power generating system 1 for rapid charging and a power generation state according to a first example of the present invention. FIGS. 4A, 4B, and 4C are explanatory diagrams of operating points of the engine and the power generator according to the first example of the present invention.

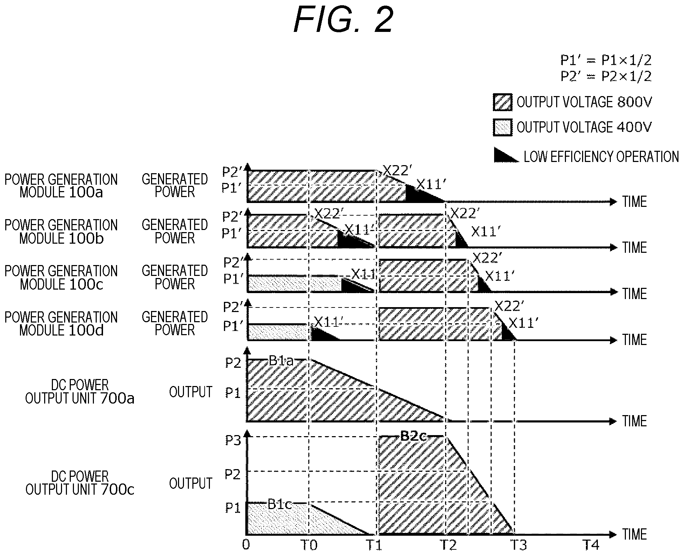

FIGS. 1A and 1B illustrate operating states of the power generating system for rapid charging at different times 0 and T1, respectively, and FIGS. 2 and 3 illustrate power generation states.

As illustrated in FIG. 1A, the power generating system 1 includes a plurality of power generation modules 100a, 100b, 100c, 100d. Each of power generation modules 100a, 100b, 100c, 100d includes: an engine 200 (200a, 200b, 200c, 200d) that combusts fuel to generate power; a renewable energy-derived fuel supply device 900 (although only one is illustrated, it may be provided to each of the power generation modules 100a, 100b, 100c, and 100d) that causes the engine 200 (200a, 200b, 200c, 200d) to combust the renewable energy-derived fuel to generate power; a power generator 300 that generates AC power from the power of the engine 200; an AC/DC converter 400 (400a, 400b, 400c, 400d) that converts the AC power into DC power; and a module power output unit 401 that outputs the DC power.

The plurality of module power output units 401 adjacent to each other are connected to each other via parallel adjustment switches 31a, 31b, and 31c capable of opening and closing the connection, and the parallel adjustment switches 31a, 31b, and 31c are connected to each other so as to form a continuous series connection.

Furthermore, at least one of module power output units 401 included in each of the plurality of power generation modules 100 (100a, 100b, 100c, 100d) is connected to the DC power output unit 700 (700a, 700b) via series adjustment switch 30 (30a, 30c).

In addition, at least two parallel adjustment switches 31(31a, 31b) are provided between the DC power output units 700 (700a, 700c) adjacent to each other. The parallel adjustment switches 31a and 31b and the series adjustment switch 30 (30a, 30c) may have any configuration as long as they are provided in an adjustment circuit unit 3 and are openable and closable switches.

However, since current is conducted when power is supplied to the battery, a switch having a small conduction loss is preferable. Specifically, a low-loss semiconductor switch, a mechanical contact having a small contact resistance, or the like is desirable. A mechanical contact is desirable from the viewpoint of realizing lower cost.

In the example illustrated in FIG. 1A, the series adjustment switches 30a and 30c are connected to the DC power output units 700a and 700c, respectively, while the series adjustment switches 30b and 30d are electrically opened. In addition, two parallel adjustment switches 31a and 31b are provided between the adjacent DC power output units 700a and 700c. With such a configuration, when both the DC power output units 700a and 700c are used at the same time, the output ratio of 700a:700c can be freely changed between 2:2 and 1:3.

The renewable energy-derived fuel supply device 900 illustrated in FIG. 1A is provided in the power generating system 1 according to the example of the present invention, but is not illustrated in other drawings.

Here, the configuration of the first example of the present invention illustrated in FIGS. 1A and 1B greatly differs from the example illustrated in FIGS. 13A and 13B in two points.

The first point is that a small-capacity power generation modules 100 (100a, 100b, 100c, 100d) is used such that the number of power generation modules 100 (four in the first example illustrated in FIGS. 1A and 1B) is larger than the number of DC power output units (two in the example illustrated in FIGS. 13A and 13B).

The second point is that the generated power of each power generation module 100 (100a, 100b, 100c, 100d) is aggregated and distributed by the adjustment circuit 3, and is freely distributed to the plurality of EV batteries without using a DC/DC converter.

As a result, the generated voltage can be freely set for each power generation module 100 (100a, 100b, 100c, 100d), and at the same time, the power supply amount can be adjusted in a wider range with respect to one EV battery, and rapid charging can be provided to EVs having different battery voltage specifications at low cost and with high efficiency.

At time 0 illustrated in FIG. 1A, the outputs of the AC/DC converters 400a and 400b of the power generation modules 100a and 100b are combined by the parallel adjustment switch 31a, and are connected to the DC power output unit 700a by the series adjustment switch 30a. Similarly, the outputs of the AC/DC converters 400c and 400d of the power generation modules 100c and 100d are combined by the parallel adjustment switch 31c, and further connected to DC power output unit 700c by the series adjustment switch 30c. At this time, the parallel adjustment switch 31b between the power generation modules 100b and 100c is opened. An EV battery B1a having a voltage specification of 800 V is connected to the DC power output unit 700a, and an EV battery B1c having a voltage specification of 400 V is connected to the DC power output unit 700c.

At time T1 illustrated in FIG. 1B, charging of the 400 V EV battery B1c connected to the DC power output unit 700c is completed, and the 800 V EV battery B2c is newly connected. At this time, an output of the AC/DC converter 400a of power generation module 100a is connected to DC power output unit 700a by the series adjustment switch 30a. On the other hand, the outputs of the AC/DC converters 400b, 400c, and 400d of the power generation modules 100b, 100c, and 100d are combined by the parallel adjustment switches 31b and 31c, and are connected to the DC power output unit 700c by the series adjustment switch 30c. The parallel adjustment switch 31a between the power generation modules 100a and 100b is opened. The EV batteries B1a and B2c having a voltage specification of 800 V are connected to the DC power output units 700a and 700c, respectively.

FIG. 2 is a diagram illustrating generated power of the power generation modules 100a, 100b, 100c, and 100d and the outputs of the DC power output units 700a and 700c in the connection state illustrated in FIGS. 1A and 1B. The power generation outputs P1' and P2' of the power generation module 100 (100a, 100b, 100c, 100d) are outputs of half the generated powers P1 and P2 of the engine illustrated in FIGS. 13 A to 13 C, respectively.

FIGS. 4A to 4C illustrate operating points of the engine and the power generator at this time. The power generator modules 100a, 100b, 100c, and 100d have the same specifications, and all have the characteristics shown in FIGS. 4A to 4C. In FIGS. 4A to 4C, the same can be said as the example illustrated in FIGS. 12A to 12C, except that the outputs P0', P1', and P2' are half the generated power P0, P1, and P2 illustrated in FIGS. 12A to 12C, respectively.

With respect to the power generation efficiency at each time in FIG. 2, the following can be said with reference to FIGS. 4A to 4C.

Looking at the period from time 0 to time T0, the power generation modules 100a and 100b each generate power having an output voltage of 800 V and a magnitude of P2' (= P2 × 0.5). This is combined by the adjustment circuit unit 3, output as power having a voltage of 800 V and a magnitude of P2 by the DC power output unit 700a, and supplied to the battery B1a. The power generation modules 100c and 100d each generate power having an output voltage of 400 V and a magnitude of P1' (= P1 × 0.5). This is combined by the adjustment circuit unit 3, output as power having a voltage of 400 V and a magnitude of P1 by the DC power output unit 700c, and supplied to the battery B1c. At this time, since the power generation modules 100a and 100b that output power having a voltage of 800 V and a magnitude of P2' are operated at the operating point X22', the system efficiency is maximized. The power generation modules 100c and 100d that output power having a voltage of 400 V and a magnitude of P1' are also operated at the operating point X11', so that the system efficiency is maximized.

When the charging proceeds to time T0 to T1, the battery temperature becomes high, and thus a need to reduce the supply power to the battery to suppress the temperature rise arises. However, since the power generating system 1 according to the first example of the present invention uses the power generation module 100 (100a, 100b, 100c, 100d) having a small capacity, there is an advantage that the plurality of engines 200 (200a, 200b, 200c, 200d) can continue a highly efficient operation under a high load. Specifically, the power generation module 100a can maintain high efficiency operation at the operating point X22' of the output P2'. The power generation module 100b gradually reduces the generated power from P2' → P1' → 0, that is, the operating point transitions from X22' → X11' → X10', but the efficiency becomes low only in the vicinity of time T1. At this time, the output of the DC power output unit 700a is supplied to the battery B1a while being gradually reduced from P2 to P1.

Similarly, the power generation module 100c maintains high efficiency operation at the operating point X11' of the output P1' for a while, and then gradually reduces from P1' to 0. That is, the operating point transitions from X11' → X10', but the efficiency becomes low only in the vicinity of time T1. The power generation module 100d gradually reduces the generated power from P1' to 0 at time T0. That is, since the operating point transitions from X11' → X10', the efficiency is low but only for a short time. At this time, the output of the DC power output unit 700c is supplied to the battery B1c while being gradually reduced from P1 to 0. Then, the battery B1c is fully charged at time T1.

Subsequently, looking at time T1 to T2, the power generation module 100a gradually reduces the generated power to P2' (= P2 × 0.5 = P1) → P1' → 0 while maintaining the output voltage 800 V, that is, the operating point transitions to X22' → X11' → X10', but the efficiency becomes low only in the vicinity of time T2. At this time, the output of the DC power output unit 700a is supplied to the battery B1a while being gradually reduced from P1 to 0. At time T2, the battery B1a is fully charged.

On the other hand, power generation modules 100b, 100c, 100d can maintain high efficiency operation at the operating point X22' having an output voltage of 800 V and a magnitude of P2', respectively. This is combined by the adjustment circuit unit 3, output as power having a voltage of 800 V and a magnitude of P3 (= P2' × 3) by the DC power output unit 700c, and supplied to the battery B2c.

After time T2, the power generation module 100a stops operating. The three power generation modules 100b, 100c, and 100d gradually reduce the generated power in order from P2' → P1' → 0 while maintaining the output voltage of 800 V, that is, the operating point transitions from X22' → X11' → X10', but the efficiency is low only for a short time. At this time, the output of the DC power output unit 700c is supplied to the battery B2c while being gradually reduced from P3 to 0.

In this way, by adopting the configuration illustrated in FIGS. 1A and 1B, the power supply amount can be freely adjusted with respect to the EV having different battery voltage specifications without using the DC/DC converter 500 (500a, 500b) illustrated in FIGS. 13A and 13B.

As a result, the battery B2c is fully charged at time T3, and the charging time can be greatly shortened. Assuming that the total power generation amount of the power generation modules 100a, 100b, 100c, and 100d between time 0 and time T3 illustrated in FIG. 2 is 100%, the power generation amount in the low efficiency operation is only about 5%, and the power generation efficiency can be significantly improved with respect to the configurations illustrated in FIGS. 11A, 11B, 13A, and 13B.

As described above, the configuration of the power generating system 1 of the first example of the present invention illustrated in FIGS. 1A and 1B is summarized as follows from the viewpoint of the degree of freedom of the generated voltage, the degree of freedom of the load factor adjustment, and the power generation efficiency.

1) The degree of freedom in the generated voltage is high. This is because the power can be freely distributed to the plurality of EV batteries via the adjustment circuit unit 3. As a result, there is an advantage that EV batteries having different voltage specifications can be flexibly responded.
2) The degree of freedom of load factor adjustment is high. This is because the power of the plurality of power generation modules 100 can be aggregated in the adjustment circuit unit 3. As a result, as shown at times T1 to T2 in FIG. 2, the plurality of power generation modules can be operated at a high load, and the power exceeding the maximum generated power of one power generation module can be supplied to one EV battery, so that the charging time can be greatly shortened.
3) The power generation efficiency of the power generating system 1 of the first example is significantly improved as compared with the examples illustrated in FIGS. 11A and 11B and the examples illustrated in FIGS. 13A and 13B. This is also related to 2) described above, but this is because the plurality of power generation modules 100 (100a, 100b, 100c, 100d) can be operated at a high load and a highly efficient operating point.

Regarding the above 3), it is possible to further increase the efficiency by operating as illustrated in FIG. 3. That is, at the operation point where the efficiency of power generation module 100 (100a, 100b, 100c, 100d) decreases, the operation is stopped for the power generation module in which the efficiency decreases among the power generation modules 100 (100a, 100b, 100c, 100d). However, power necessary for fully charging the battery can be supplied by continuing the operation of another power generation module with respect to the power to be generated by the power generation module that has stopped the operation.

Specifically, in FIG. 3, between time 0 and T2, the power generation module 100b stops after time T0 in the middle of reducing from output P2' to P1'. In addition, the power generation module 100a continues the operation time at the operating point X22' until after time T1, and then stops in the middle of reducing from output P2' to P1'. Similarly, the other power generation modules 100c and 100d stop the operation before entering the low efficiency operation.

As a result, while the amount of power supplied from the DC power output unit 700a to the battery B1a is maintained at the same level as the generated power illustrated in FIG. 2, the operating point at which the power generation module 100 (100a, 100b, 100c, 100d) has low efficiency can be avoided, and the operation can be always performed at the highly efficient operating point.

As described above, according to the first example of the present invention, the principle capable of providing a power generating system which is low in cost and excellent in all of the degree of freedom of the generated voltage, the degree of freedom of the load factor adjustment, and the power generation efficiency has been described.

In the prior art, there is no idea of configuring only a plurality of small engines in parallel, and an idea of aggregating and distributing outputs of existing large-scale power generation facilities with a DC bus has been used. When such a large-scale power generation facility is used, it is difficult to immediately respond to the charging power required for the DC power output unit 700 as indicated by time 0 or T1 in FIG. 2.

In addition, even if only one part is replaced with a small engine power generator, it is difficult to maintain a highly efficient operation in the entire power generating system since the supply power greatly changes during the rapid charging.

Furthermore, in addition to the above problems, since it is practically necessary to respond to the EVs having different battery voltage specifications, a DC/DC converter is newly required in the case of using an existing large-scale power generation facility, and an increase in cost cannot be avoided.

The first example of the present invention is new in that outputs of a plurality of arranged small engine power generation modules 100 (100a, 100b, 100c, 100d) are appropriately combined only by the parallel adjustment switches 31a, 31b, and 31c instead of being aggregated by the DC bus, and in that the combined power is appropriately output only by the series adjustment switches 30a and 30c without using the DC/DC converter.

As a result, the power generation module 100 (100a, 100b, 100c, 100d) can freely output voltages suitable for various battery specifications, can immediately respond to the required power, and can always maintain a highly efficient operation state.

Furthermore, an inexpensive engine for an automobile, which is an existing internal combustion engine, is used as an engine constituting the small power generation module 100 (100a, 100b, 100c, 100d), an inexpensive motor (electric motor) mass-produced for EV is used as a power generator, and an inexpensive inverter mass-produced for EV is used for the AC/DC converters 400a, 400b, 400c, and 400d, whereby the equipment cost of the power generation module 100 (100a, 100b, 100c, 100d) can be greatly reduced. The engine may use a used engine of an internal combustion engine vehicle, in which case the equipment cost can be further reduced.

In order to realize such a configuration, the relationship between the number Np of the parallel adjustment switches 31a, 31b, and 31c included in the adjustment circuit unit 3 and the number Ns of the DC power output units 700 (700a, 700b) may be Np>Ns.

As described above, according to the first example of the present invention, it is possible to provide a power generating system and a power generation control method capable of supplying low-cost and highly efficient power to devices having different battery voltage specifications.

### (Second example)

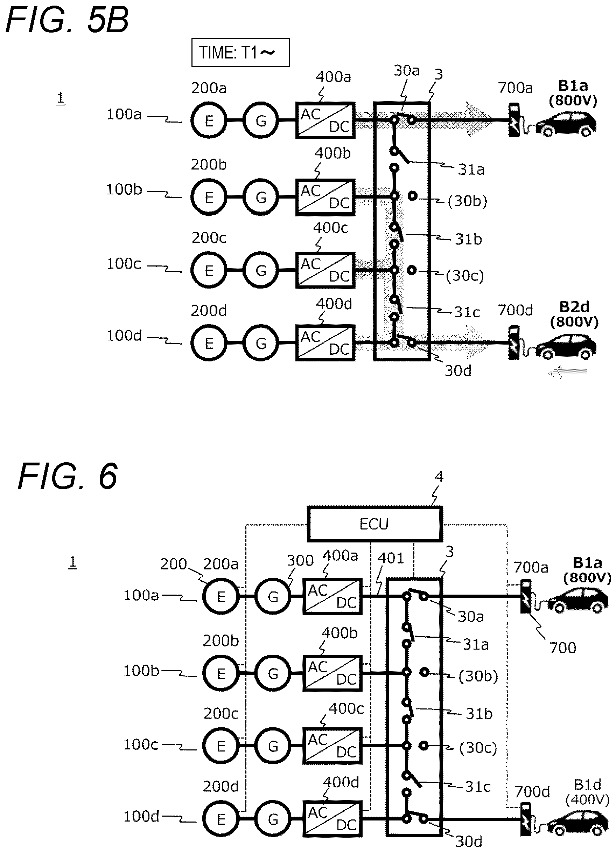

Next, a second example of the present invention will be described with reference to FIGS. 5A and 5B. FIGS. 5A and 5B are explanatory diagrams of the power generating system 1 for rapid charging and a power generation state according to the second example of the present invention. FIGS. 5A and 5B illustrate operating states of the power generating system 1 for rapid charging at different times 0 and T1, respectively.

FIGS. 5A and 5B are different from FIGS. 1A and 1B illustrating the first example in that the DC power output units 700a and 700d are connected to the series adjustment switches 30a and 30d included in the adjustment circuit unit 3, respectively, and three parallel adjustment switches 31a, 31b, and 31c are arranged between the adjacent DC power output units 700a and 700d. The series adjustment switches 30b and 30c are in an electrically opened state. Note that the adjustment circuit unit 3 is configured by standardizing one set of the series adjustment switch 30 and the parallel adjustment switch 31 as a minimum unit and combining a plurality of sets. As a result, the cost of the adjustment circuit unit 3 can be further reduced. In addition, by intentionally providing the series adjustment switches 30b and 30c in the open state, the DC power output unit 700 can be freely increased according to the demand form.

With such a configuration, when both the DC power output units 700a and 700d are simultaneously used, the output ratio of the power output unit 700a : the power output unit 700d can be freely changed from 1:3 to 3:1.

Therefore, as compared with the configurations of FIGS. 1A and 1B illustrating the power generating system 1 of the first example, the power supply amount can be adjusted in a wider range for the plurality of EV batteries, and thus the charging time can be shortened in more cases.

In the power generating system 1 of FIGS. 5A and 5B, three parallel adjustment switches 31 (31a, 31b, 31c) are disposed between adjacent DC power output units 700a and 700d, but the number of parallel adjustment switches 31 may be a number x (≥ 3) greater than or equal to 3.

In that case, the output ratio of the adjacent DC power output units 700a and 700x can be freely changed between 1:x and x:1.

In addition, in FIGS. 5A and 5B, the number Ns of the DC power output units 700 is two, but even in a case where Ns is greater than or equal to three, the output ratio can be changed in a wide range by adopting the same configuration for the adjacent DC power output units 700.

Other configurations are similar to those of the first example.

In the second example of the present invention as well, the same effect as in the first example can be obtained, and the power supply amount can be adjusted in a wider range with respect to the plurality of EV batteries, so that the charging time can be shortened.

### (Third example)

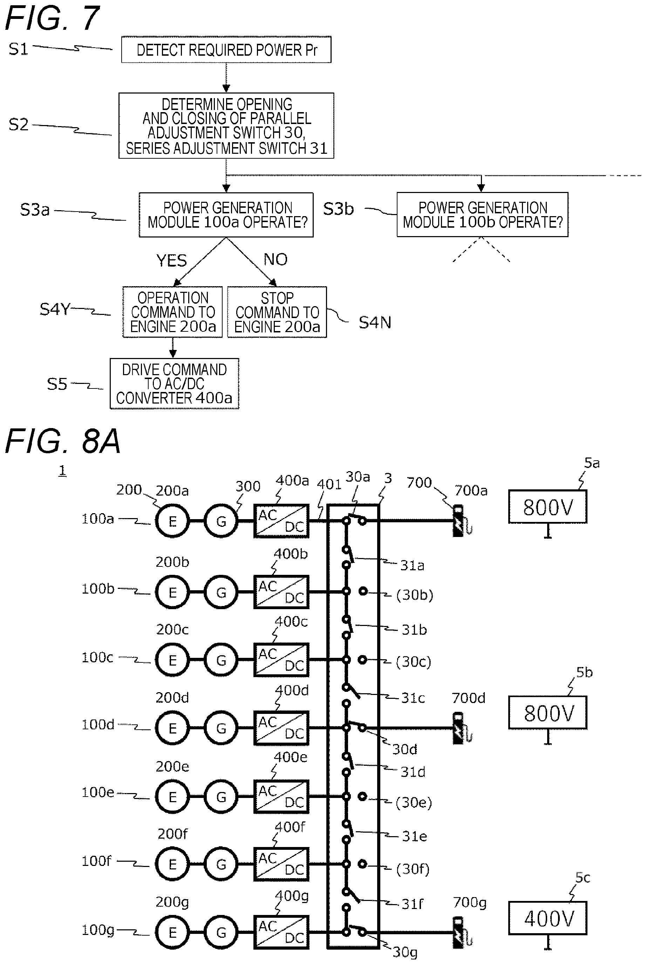

A third example of the present invention will be described with reference to FIGS. 6 and 7.

FIGS. 6 and 7 are explanatory diagrams of a control device and a power generation control method of the power generating system 1 for rapid charging according to the third example of the present invention.

As illustrated in FIG. 6, the power generating system 1 includes an adjustment circuit unit 3 including parallel adjustment switches 31a, 31b, 31c and series adjustment switches 30a, 30b, 30c, 30d, and includes a control unit (ECU) 4 that controls the power generation module 100 (100a, 100b, 100c, 100d) and the adjustment circuit unit 3 based on the required power Pr detected by the DC power output unit 700 (700a, 700b).

The power generation module 100 (100a, 100b, 100c, 100d) includes an engine 200 (200a, 200b, 200c, 200d) including a renewable energy-derived fuel supply device 900 and an engine controller (not shown), a power generator 300, an AC/DC converter 400 (400a, 400b, 400c, 400d), and a module power output unit 401.

As illustrated in FIG. 7, the control unit 4 detects the required power Pr required for the DC power output unit 700 (700a, 700b) in step S1, determines opening and closing of the parallel adjustment switches 31a, 31b, 31c and the series adjustment switches 30a, 30d in step S2 according to required power Pr, and determines the necessity of operating the power generation modules 100a, 100b, 100c, 100d after step S3 (S3a, S3b, ...).

In step S4 (S4Y, S4N), a stop command (step S4N) or an operation command (step S4Y (rotation speed command, torque command, ratio of renewable energy-derived fuel, etc.)) is given to the engine 200 (200a, 200b, 200c, 200d, in particular, an engine controller (not shown) and a renewable energy-derived fuel supply device 900), and in step S5, a drive command (current command, voltage command) is given to the AC/DC converter 400 (400a, 400b, 400c, 400d).

In step S4, the control unit 4 can determine the ratio of the renewable energy-derived fuel to be combusted in the engines 200a, 200b, 200c, and 200d in the renewable energy-derived fuel supply device 900 according to the required power Pr.

The determination and the command of the control unit 4 in each step of steps S2 to S5 may be generated based on the efficiency map of the power generation modules 100a, 100b, 100c, and 100d calculated in advance, or may be generated based on the efficiency map obtained by measuring and calculating the state quantity at the time of the actual operation by some means. Furthermore, the power generation modules 100a, 100b, 100c, and 100d may be configured to determine opening/closing of the parallel adjustment switch switches 31a, 31b, and 31c and the series adjustment switch switches 30a and 30d, and determine the necessity of operation and an operation operating point of the power generation modules by using data subjected to mathematical processing and statistical processing by machine learning or the like based on state quantities of some or all of the power generation modules at the time of the operation.

Such control enables the power generation modules 100a, 100b, 100c, 100d to avoid an operating point at which efficiency is low and to always operate at a highly efficient operating point.

Other configurations are similar to those of the first example.

According to the third example of the present invention, in addition to the effect similar to that of the first example being obtained, since the control unit 4 is configured to control the power generation module 100 (100a, 100b, 100c, 100d) and the adjustment circuit unit 3 based on the required power Pr detected by the DC power output unit 700 (700a, 700b), it is possible to operate at a highly efficient operating point while avoiding an operating point of low efficiency.

### (Fourth example)

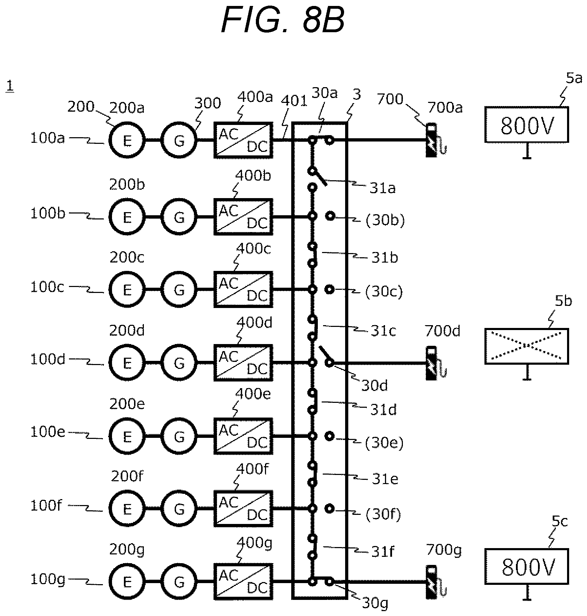

A fourth example of the present invention will be described with reference to FIGS. 8A and 8B.

FIGS. 8A and 8B are explanatory diagrams of the power generating system 1 for rapid charging and a power generation state according to the fourth example of the present invention.

As illustrated in FIG. 8A, the power generating system 1 includes seven power generation modules 100 (100a, 100b, 100c, 100d, 100e, 100f, 100g), an adjustment circuit unit 3 that aggregates the outputs, three DC power output units 700a, 700d, and 700g, and a display 5 (5a, 5b, 5c) installed near each DC power output unit 700 (700a, 700b, 700c). As described above, if the adjustment circuit unit 3 is standardized, the cost can be reduced even in a case where the power output unit 700 is increased as described above.

Three parallel adjustment switches 31a, 31b, and 31c are disposed between the adjacent DC power output units 700a and 700d, and three parallel adjustment switches 31d, 31e, and 31f are disposed between the adjacent DC power output units 700d and 700g. Assuming that the allowable power and the allowable voltage of the three DC power output units 700 (700a, 700d, 700g) have the same specification, the output ratios of the DC power output unit 700a : DC power output unit 700d and the DC power output unit 700d : DC power output unit 700g can be freely changed from 1:3 to 3:1, respectively. On the other hand, when only the allowable power and the allowable voltage of the DC power output unit 700d are increased to about 2 times, the output ratio of the DC power output unit 700a : the DC power output unit 700d : the DC power output unit 700g can be increased to 1:5:1.

The battery voltage specification scheduled to be output by each DC power output unit 700 (700a, 700d, 700g) is displayed on the display 5 (5a, 5b, 5c). For example, the voltage may be displayed as 800/400V or a specific voltage may be displayed so that a plurality of battery voltage specifications can be responded. In the case of displaying a specific voltage, the open/close states of the parallel adjustment switches 31a, 31b, 31c, 31d, 31e, and 31f and the series adjustment switches 30a, 30b, 30c, 30d, 30e, and 30f of the adjustment circuit unit 3 can be determined in advance in accordance with the voltage, so that charging power can be quickly generated when the EV battery is connected, and the charging time can be shortened.

In addition, when a preset voltage is displayed on the display 5 (5a, 5b, 5c), what voltage to display may be determined based on data subjected to mathematical processing and statistical processing by machine learning using a past operation history or the like. In addition, information other than the voltage specification may be displayed on the display display 5 (5a, 5b, 5c). For example, allowable power, allowable current, charging power unit price (Y/kWh), and the like may be used, and in a case where the EV battery is connected, remaining time required for charging, current supply power, supply power amount, charging power charge, and the like may be used.

In FIG. 8A, the DC power output units 700a and 700d are set to 800 V, and 700g is set to 400 V. At this time, the parallel adjustment switches 31c and 31f are operated in the open state, and the other switches are operated in the connected state. If the demand can be accurately predicted based on the machine learning data, the time required for the switching operation of the switch of the adjustment circuit unit 3 can be reduced by operating in this manner, and the charging time can be shortened.

As illustrated in FIG. 8B, the series adjustment switch 30d can be opened and the DC power output unit 700d can be brought into an unconnected state by displaying × or not displaying the display 5b of the DC power output unit 700d. As a result, since six parallel adjustment switches 31a, 31b, 31c, 31d, 31e, and 31f are arranged between the adjacent DC power output units 700a and 700g, the output ratio of the DC power output unit 700a : DC power output unit 700g can be freely changed between 1:6 and 6:1.

In FIG. 8B, since the parallel adjustment switch 31a is in the open state, only the power of the power generation module 100a is supplied to the DC power output unit 700a, and since the parallel adjustment switches 31b, 31c, 31d, 31e, and 31f are in the connected state, combined power for six power generation modules 100b to 100g is supplied to the DC power output unit 700g. For example, the charging time can be greatly shortened even for rapid charging of an electric truck having a large battery capacity by performing such an operation at night when there are few users of EV rapid charging.

In the fourth example, a control unit 4 similar to that of the third example illustrated in FIG. 4 may be disposed, and at least one of the voltage, the current, or the required power output from the DC power output units 700a, 700d, and 700g may be displayed on the display 5.

In the fourth example, when the control unit 4 similar to that of the third example illustrated in FIG. 4 is disposed and one of the DC power output units 700a, 700d, and 700g does not output the required power, the control unit 4 displays, on the display 5, a voltage that can be output by any of the DC power output units 700a, 700d, and 700g that does not output the required power.

In this case, the control unit 4 can be configured to determine the value of the voltage displayed by the display 5 based on the past operation history and data obtained from machine learning or the like.

Other configurations are similar to those of the first example.

According to the fourth example, effects similar to those of the first example can be obtained, and the displays 5a, 5b, and 5c are arranged in the DC power output units 700a, 700b, and 700c, so that the user can quickly select the DC power output units 700a, 700b, and 700c suitable for the battery voltage specification and the like of the own EV vehicle.

### (Fifth example)

A fifth example of the present invention will be described with reference to FIG. 9.

FIG. 9 is an explanatory diagram of a power generating system 1 for rapid charging and a power generation state according to a fifth example of the present invention.

The example illustrated in FIG. 9 is different from the fourth example illustrated in FIGS. 8A and 8B in that a DC/AC converter 600 that converts DC power into AC power for a system via a system connection adjustment switch 32 is connected to one of the module power output units 401 to enable power supply to the system.

In particular, as illustrated in FIG. 9, the system connection adjustment switch 32 is connected to the end 33 of continuous series connection of the parallel adjustment switches 31a, 31b, 31c, 31d, 31e, and 31f (continuous end of the parallel adjustment switch), so that larger power can be supplied to the system.

The series adjustment switches 30d, 30g can be opened and the DC power output units 700d, 700g can be brought into an unconnected state by displaying × or not displaying the displays 5b, 5c of the DC power output units 700d, 700g.

At this time, when the parallel adjustment switch 31c is opened, the three power generation modules 100a to 100c supply the power for the rapid charging from the DC power output unit 700a, and the four power generation modules 100d to 100g supply the power to the system via the DC/AC converters 400d to 400g. For example, it is possible to play a role as stable power of the region by performing such an operation at night when there are few users of EV rapid charging.

In the technique described in PTL 1, the DC/AC converter is prepared for each power supply and demand facility, but in the present invention, only one DC/AC converter 600 is required, so that the installation area can be reduced and the facility cost can be reduced.

In addition, in the technique described in PTL 3, a technique of supplying DC power aggregated in a power combining/distributing device to a system via a DC/AC converter is disclosed, but an EV battery is simultaneously connected to the power combining/distributing device by way of the DC/DC converter.

In this case, since the output of the DC/DC converter fluctuates every moment depending on the charging state of the EV battery, there is a possibility that the fluctuation also affects the output of the DC/AC converter, which becomes a factor of making the supply power to the system unstable.

On the other hand, in the fifth example of the present invention, since the power supplied to the EV battery and the power supplied to the system can be operated independently of each other, the power supplied to the system does not become unstable.

Other configurations are similar to those of the first example.

According to the fifth example, it is possible to obtain effects similar to those of the first example, and it is also possible to play a role as stable power of a region since power can be supplied to other systems via the DC/AC converter 600.

The power generation control method of the present invention is configured as follows.

Fuel derived from renewable energy is combusted in a plurality of engines 200 to generate power, a plurality of power generators 300 are operated by the power of the plurality of engines 200 to generate a plurality of AC power, the plurality of AC power is converted into a plurality of DC power by a plurality of AC/DC converters 400, and at least one or two or more of the plurality of DC power are combined and output.

### Reference Signs List

1 power generating system
3 adjustment circuit unit
4 control unit (ECU)
5a, 5b, 5c display
30a, 30b, 30c, 30d, 30e, 30f series adjustment switch
31a, 31b, 31c, 31d, 31e, 31f parallel adjustment switch
32 system connection adjustment switch
33 continuous end of parallel adjustment switch
100a, 100b, 100c, 100d, 100e, 100f, 100g power generation module
200a, 200b, 200c, 200d, 200e, 200f, 200g engine
300 power generator
400a, 400b, 400c, 400e, 400f, 400g AC/DC converter
401 module power output unit
600 DC/AC converter
700a, 700c, 700d, 700g DC power output unit
900 renewable energy-derived fuel supply device

## Claims

1. A power generating system comprising a plurality of power generation modules each including an engine that combusts fuel to generate power, a renewable energy-derived fuel supply device that causes the engine to combust fuel derived from renewable energy to generate power, a power generator that generates alternating-current (AC) power from the power of the engine, an AC/DC converter that converts the alternating-current power into direct-current (DC) power, and a module power output unit that outputs the DC power,
wherein the module power output units adjacent to each other are connected to each other via a plurality of parallel adjustment switches capable of opening and closing the connection, the parallel adjustment switches being connected to each other so as to be a continuous series connection, and a DC power output unit that connects at least one of the module power output units via one of the plurality of series adjustment switches being included.

2. The power generating system according to claim 1, further comprising
an adjustment circuit unit including the parallel adjustment switch and the series adjustment switch, and a control unit that controls the power generation module and the adjustment circuit unit,
wherein the control unit detects required power required for the DC power output unit, determines opening/closing of the parallel adjustment switch and the series adjustment switch according to the required power, and determines necessity of operation and an operation operating point of the power generation module.

3. The power generating system according to claim 2, wherein the control unit determines opening/closing of the parallel adjustment switch and the series adjustment switch based on a state quantity of the power generation module at the time of operation and data obtained from machine learning, and determines necessity of operation and an operation operating point of the power generation module.

4. The power generating system according to claim 2 or 3, wherein the control unit determines a ratio of the renewable energy-derived fuel to be combusted in the engine by the renewable energy-derived fuel supply device according to the required power.

5. The power generating system according to any one of claims 2 to 4, wherein
a display is installed in the vicinity of the DC power output unit, and
when the DC power output unit detects the required power, the control unit displays at least one of a voltage, a current, or the required power output from the DC power output unit on the display.

6. The power generating system according to claim 5, wherein when the DC power output unit does not output the required power, the control unit displays a voltage that can be output by the DC power output unit on the display.

7. The power generating system according to claim 6, wherein the control unit determines a value of a voltage displayed on the display based on a past operation history and data obtained from machine learning.

8. The power generating system according to any one of claims 1 to 7, wherein the number Np of the parallel adjustment switches included in the adjustment circuit unit and the number Ns of the DC power output units satisfy Np > Ns.

9. The power generating system according to any one of claims 1 to 8, wherein the adjustment circuit unit is connected to a plurality of the DC power output units, and includes at least two of the parallel adjustment switches between the DC power output units adjacent to each other.

10. The power generating system according to any one of claims 1 to 9, further comprising:
a system connection adjustment switch; and
a DC/AC converter,
wherein one of a plurality of the module power output units converts DC power into AC power for a system via the system connection adjustment switch.

11. The power generating system according to claim 10, wherein the system connection adjustment switch is connected to an end of continuous series connection of the plurality of parallel adjustment switches.

12. The power generating system according to any one of claims 1 to 11, wherein the engine is an engine of an automobile which is an internal combustion engine.

13. The power generating system according to any one of claims 1 to 12, wherein the power generator is a motor for EV.

14. The power generating system according to any one of claims 1 to 13, wherein the AC/DC converter is an inverter for EV.

15. The power generating system according to any one of claims 1 to 14, wherein the adjustment circuit unit includes at least two or more sets of switch modules each including a set of the parallel adjustment switch and the series adjustment switch.

16. A power generation control method comprising:
causing a plurality of engines to combust fuel derived from renewable energy to generate power;
operating a plurality of power generators by power of the plurality of engines to generate a plurality of AC power; and
converting the plurality of AC power into a plurality of DC power by a plurality of AC/DC converters, and combining and outputting at least one or two or more of the plurality of DC power.
